# EUROPÄISCHE PATENTSCHRIFT

(11) **EP 3 803 164 B1**
(45) Veröffentlichungstag und Bekanntmachung des Hinweises auf die Patenterteilung: **09.08.2023**
(21) Anmeldenummer: 19719513.4
(22) Anmeldetag: 25.04.2019
(51) Int. Cl.: F16J 15/34

(54) **GLEITRINGDICHTUNGSANORDNUNG FÜR NULL-EMISSION**
MECHANICAL FACE SEAL ASSEMBLY FOR ZERO EMISSIONS
ENSEMBLE DE JOINTS D'ÉTANCHÉITÉ À BAGUE DE GLISSEMENT POUR ZÉRO ÉMISSION

(30) Priorität: 29.05.2018 DE 102018208519
(43) Veröffentlichungstag der Anmeldung: 14.04.2021
(73) Patentinhaber: EagleBurgmann Germany GmbH & Co. KG, 82515 Wolfratshausen (DE)
(72) Erfinder: WERDECKER, Ferdinand, 82432 Walchensee (DE); FESL, Andreas, 83624 Otterfing (DE); MÜLLER, Michael, 83673 Bichl (DE); STROBL, Josef, 83700 Rottach-Egern (DE); STROHMEIER, Johannes, 83703 Gmund (DE); HELLMIG, Benjamin, 81543 München (DE)
(74) Vertreter: Hoefer & Partner Patentanwälte mbB
(86) Internationale Anmeldenummer: PCT/EP2019/060552
(87) Internationale Veröffentlichungsnummer: WO 2019/228714

(56) Entgegenhaltungen:
- EP-A1- 2 735 777
- CN-A- 101 776 152
- CN-A- 102 853 085
- CN-U- 201 992 064
- DE-A1-102015 226 444

## Beschreibung

Die vorliegende Erfindung betrifft eine gasgeschmierte Gleitringdichtungsanordnung und einen Verdichter mit Null-Emission, welche vollständig einen Austritt eines abzudichtenden Mediums verhindern kann.

Gleitringdichtungsanordnungen sind aus dem Stand der Technik in unterschiedlichen Ausgestaltungen bekannt. Beispielsweise zeigt die DE 10 2015 226 444 A1 eine Gleitringdichtungsanordnung für toxische Medien, welche eine Leckage eines Sperrfluids in Richtung zur Produktseite drastisch reduzieren kann. Hierbei ist in einer Gleitfläche eine umlaufende Nut mit Förderausnehmungen vorgesehen, welche sehr aufwändig herzustellen ist. Weiterhin werden Gleitringdichtungsanordnungen beispielsweise zur Abdichtung an Wellen von Verdichtern oder Kompressoren verwendet, welche gasförmiges Methan oder Erdgas oder ein anderes methanhaltiges Gas fördern. Bei Methan handelt es sich nicht um ein toxisches Medium, allerdings ist Methan ein Gas, welches den Treibhauseffekt im Vergleich mit Kohlendioxid exponentiell verstärkt. Von daher sollte eine Leckage des Methans über die Gleitringdichtungsanordnung möglichst verhindert werden. Ferner werden methanhaltige Gase insbesondere über sehr lange Pipelines aus entfernt liegenden Gebieten gefördert. Hierbei sind an den Pipelines eine Vielzahl von sogenannten Verdichterstationen angeordnet, an denen jeweils ein Verdichter oder Kompressor oder dergleichen vorhanden ist, dessen Antriebswelle mit einer Gleitringdichtungsanordnung abgedichtet werden muss. Aufgrund der schlechten Erreichbarkeit derartiger Verdichterstationen muss hinsichtlich der Gleitringdichtungsanordnung sichergestellt werden, dass diese praktisch wartungsfrei ist und es garantiert ist, dass kein Methan über die Gleitringdichtungsanordnung in die Atmosphäre austritt. Weiterhin zeigen die Druckschriften CN 101 776 152 A, CN 102 853 083 A und CN 201 992 064 U eine Fluidzuleitung von einem Außenumfang eines Gleitrings durch den Gleitring zu einer Gleitfläche. Die EP 2 735 777 A1 zeigt eine Fluidleitung von einer Rückseite eines Gleitrings zu einer porösen Schicht, an der eine Gleitfläche ausgebildet ist.

Es ist daher Aufgabe der vorliegenden Erfindung, eine Gleitringdichtungsanordnung und einen Verdichter bereitzustellen, welche bei einfachem Aufbau und einfacher, kostengünstiger Herstellbarkeit mit höchster Sicherheit verhindert, dass ein abzudichtendes Medium in die Atmosphäre gelangt.

Diese Aufgabe wird durch eine Gleitringdichtungsanordnung mit den Merkmalen des Anspruchs 1 und einen Verdichter mit den Merkmalen des Anspruchs 10 gelöst. Die Unteransprüche zeigen bevorzugte Weiterbildungen der Erfindung.

Die erfindungsgemäße gasgeschmierte Gleitringdichtungsanordnung mit den Merkmalen des Anspruchs 1 kann dabei mit höchster Sicherheit verhindern, dass ein abzudichtendes Produkt, insbesondere ein methanhaltiges Gas, an die Atmosphäre gelangt. Hierbei weist die Gleitringdichtungsanordnung trotzdem einen relativ einfachen und kostengünstigen Aufbau auf. Dies wird erfindungsgemäß dadurch erreicht, dass die Gleitringdichtungsanordnung eine erste Gleitringdichtung mit einem ersten rotierenden und einem ersten stationären Gleitring umfasst, welche zwischen sich einen ersten Dichtspalt definieren. Der erste stationäre Gleitring weist einen Durchgangskanal, bevorzugt in Form einer Bohrung, zum Zuführen eines Sperrfluids auf. Der Durchgangskanal führt dabei von einer Rückseite des ersten stationären Gleitrings zu einer Gleitfläche des ersten stationären Gleitrings. Weiterhin ist am ersten rotierenden Gleitring eine erste Nebendichtung zur Abdichtung und eine Zentriereinrichtung zur Zentrierung des ersten rotierenden Gleitrings angeordnet. Somit erfolgt am rotierenden Gleitring eine Trennung einer Funktion der Abdichtung und einer Funktion einer Zentrierung des ersten rotierenden Gleitrings durch Verwendung von zwei separaten Bauteilen. Der erste rotierende Gleitring kann dabei frei von Ausnehmungen oder dergleichen sein.

Weiter ist an einer Rückseite des ersten stationären Gleitrings eine zweite und eine dritte Nebendichtung angeordnet. Hierbei ist ein Fluidpfad zum Durchgangskanal im ersten stationären Gleitring zwischen der zweiten und dritten Nebendichtung angeordnet. Das heißt, das Sperrfluid strömt von der Rückseite des ersten stationären Gleitrings in einem Bereich zwischen der zweiten und dritten Nebendichtung in den Durchgangskanal und von dort zum Dichtspalt.

Dabei ist die Anordnung dabei derart, dass ein erster Radius R1 der ersten Nebendichtung zwischen einem zweiten Radius R2 der dritten Nebendichtung und einem dritten Radius R3 der vierten Nebendichtung liegt. Die Radien werden hierbei von einer Mittelachse der Gleitringdichtungsanordnung aus bestimmt. Mit anderen Worten ist die Ungleichung R2 < R1 < R3 erfüllt. Dadurch ist sichergestellt, dass ein Verkippen des ersten stationären Gleitrings relativ zum zweiten stationären Gleitring vermieden wird.

Vorzugsweise umfasst die Gleitringdichtungsanordnung eine zweite Gleitringdichtung mit einem zweiten rotierenden und einem zweiten stationären Gleitring, welche zwischen sich einen zweiten Dichtspalt definieren. Die zweite Gleitringdichtung ist somit eine Sicherheitsdichtung, welche im Falle eines Versagens der ersten Gleitringdichtung verhindert, dass das Produkt zur Atmosphäre gelangt. Somit ist die Gleitringdichtungsanordnung eine sogenannte Tandem-Anordnung mit zwei in Reihe angeordneten Gleitringdichtungen. Bevorzugt ist die zweite Zentriereinrichtung zur Zentrierung des ersten rotierenden Gleitrings dabei an einer radial inneren Fläche und/oder einer radial äußeren Fläche des ersten rotierenden Gleitrings angeordnet.

Vorzugsweise ist die erste Nebendichtung zur Abdichtung an einer Rückseite des ersten rotierenden Gleitrings angeordnet. Bevorzugt ist die erste Nebendichtung hierbei in einer Nut in einem Gleitringträger für den rotierenden Gleitring angeordnet.

Besonders bevorzugt liegt der erste Radius R1 mittig zwischen dem zweiten Radius R2 und dem dritten Radius R3. D.h. R1 = (R2 + R3) / 2.

Weiter bevorzugt umfasst die Gleitringdichtungsanordnung ferner eine Stickstoffquelle (N2-Quelle). Die Stickstoffquelle ist vorzugsweise ein Stickstofftank. Weiter bevorzugt umfasst die Gleitringdichtungsanordnung auch einen Stickstoff-Erzeuger. Hierdurch kann aus der Umgebungsluft Stickstoff erzeugt werden und im Stickstofftank zwischengespeichert werden. Aus dem Stickstofftank kann der Stickstoff dann als gasförmiges Sperrfluid für die Gleitringdichtungsanordnung zum Durchgangskanal am ersten stationären Gleitring geführt werden.

Weiter bevorzugt umfasst die Gleitringdichtungsanordnung einen Durchflussmesser, welcher in einer Zuleitung zum Zuführen des Sperrfluids zum Durchgangskanal angeordnet ist, sowie eine Steuereinheit und ein Differenzdruckregelventil, welches in einer Zuleitung angeordnet ist. Weiterhin ist ein Drucksensor am Produktraum angeordnet, um der Steuereinheit einen aktuellen Produktdruck zu übermitteln. Die Steuereinheit ist dabei eingerichtet, das Differenzdruckregelventil insbesondere basierend auf dem Produktdruck zu steuern.

Weiter bevorzugt umfasst die Gleitringdichtungsanordnung ferner eine Überwachungseinrichtung, welche in einer Rückleitung, die von einem Bereich zwischen der ersten und zweiten Gleitringdichtung abführt, angeordnet ist und bei einem Versagen der Gleitringdichtung ein Störsignal, z.B. an eine Leitstelle o.ä., sendet.

Nachfolgend wird ein bevorzugtes Ausführungsbeispiel der Erfindung unter Bezugnahme auf die begleitende Zeichnung im Detail beschrieben. In der Zeichnung ist:
- Fig. 1: eine schematische Schnittansicht einer Gleitringdichtungsanordnung gemäß einem ersten bevorzugten Ausführungsbeispiel der Erfindung, und
- Fig. 2: eine schematische Schnittansicht einer Gleitringdichtungsanordnung gemäß einem zweiten bevorzugten Ausführungsbeispiel der Erfindung.

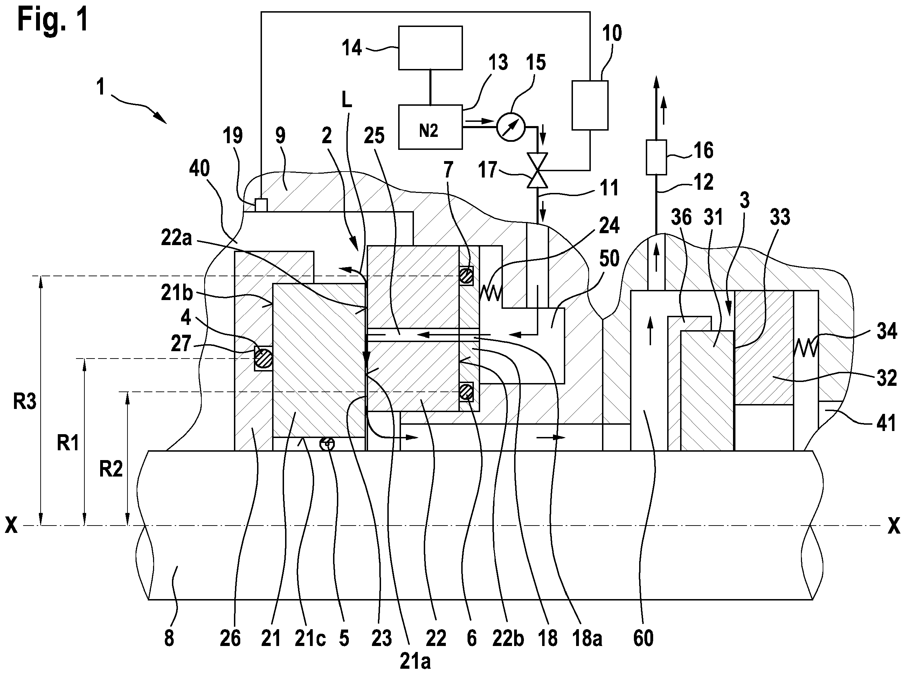

Fig. 1 zeigt eine schematische Schnittansicht einer gasgeschmierten Gleitringdichtungsanordnung 1 gemäß einem ersten Ausführungsbeispiel der Erfindung.

Die Gleitringdichtungsanordnung 1 umfasst eine erste Gleitringdichtung 2 und eine zweite Gleitringdichtung 3. Die beiden Gleitringdichtungen sind in Reihe an einer Welle 8 angeordnet und dichten einen Produktraum 40 von einem Atmosphärenbereich 41 ab. Hierbei handelt es sich um eine sogenannte Tandem-Anordnung, bei der die erste und zweite Gleitringdichtung 2, 3 in Reihe angeordnet sind.

Die erste Gleitringdichtung 2 umfasst einen ersten rotierenden Gleitring 21 und einen ersten stationären Gleitring 22, welche zwischen ihren Gleitflächen einen ersten Dichtspalt 23 definieren. Hierbei weist der erste rotierende Gleitring 21 eine Gleitfläche 21a auf und der erste stationäre Gleitring 22 eine Gleitfläche 22a auf. Ferner umfasst die erste Gleitringdichtung 2 ein erstes Vorspannelement 24, welches den ersten stationären Gleitring 22 in Richtung einer Mittelachse X-X der Gleitringdichtungsanordnung vorspannt. Der erste stationäre Gleitring 22 ist an einem Gehäuse 9 fixiert.

Die zweite Gleitringdichtung 3 umfasst einen zweiten rotierenden Gleitring 31 und einen zweiten stationären Gleitring 32, welche zwischen ihren Gleitflächen einen zweiten Dichtspalt 33 definieren. Der zweite rotierende Gleitring 31 ist hierbei mittels eines zweiten Gleitringträgers 36 an der Welle 8 befestigt. Ein zweites Vorspannelement 34 spannt den zweiten stationären Gleitring 32 in Richtung zum zweiten rotierenden Gleitring 31 vor.

Die Gleitringdichtungsanordnung 1 ist eine gasgeschmierte Gleitringdichtungsanordnung, wobei ein Sperrfluid in Form von Stickstoff vorgesehen ist. Hierzu umfasst die Gleitringdichtungsanordnung 1 eine Stickstoffquelle 13, welche über eine Zuleitung 11 Stickstoff zur ersten Gleitringdichtung 2 zuführt.

Wie aus Fig. 1 ersichtlich ist, ist im ersten stationären Gleitring 22 ein Durchgangskanal 25 vorgesehen, welcher von einer Rückseite 22b zur Gleitfläche 22a des ersten stationären Gleitrings 22 führt. Der Durchgangskanal 25 ist geradlinig und parallel zur Mittelachse X-X.

Das Bezugszeichen 14 bezeichnet einen Stickstofferzeuger, welcher Stickstoff aus der Luft entnehmen kann und zur Stickstoffquelle 13, welche beispielsweise ein Stickstofftank ist, zuführen kann.

In Fig. 1 ist der Strömungsweg des Sperrfluids durch die Pfeile dargestellt und führt von der Stickstoffquelle 13 über die Zuleitung 11 zum Durchgangskanal 25. Ein Druck des Sperrfluids ist dabei etwas höher als ein Druck des abzudichtenden Mediums im Produktraum 40, so das auch ein kleiner Anteil von Stickstoff als Leckage L zum Produktraum 40 strömt. Da das Produkt hier ein Methan enthaltendes Gas ist, ist die durch den Stickstoff auftretende Verunreinigung dieses abzudichten Produkts vernachlässigbar, insbesondere da es sich hierbei um sehr geringe Mengen handelt.

Der Hauptteil des Sperrfluids tritt an der radialen Innenseite der ersten Gleitringdichtung 2 am ersten Dichtspalt 23 aus und strömt dann in Richtung zur zweiten Gleitringdichtung 3 und von dort in eine Rückleitung 12. Das Sperrfluid kann dann aus der Rückleitung 12 an die Atmosphäre abgegeben werden.

Wie aus Fig. 1 ersichtlich ist, ist am ersten rotierenden Gleitring 21 eine erste Nebendichtung 4 und eine Zentriereinrichtung 5 angeordnet. Die erste Nebendichtung 4 ist an einer Rückseite 21b des ersten rotierenden Gleitrings 21 angeordnet. Hierbei wird der erste rotierende Gleitring 21 mittels eines ersten Gleitringträgers 26 an der Welle 8 befestigt. Im ersten Gleitringträger 26 ist eine Nut 27 vorgesehen, in welcher die erste Nebendichtung 4 angeordnet ist. Die erste Nebendichtung 4 ist in diesem Ausführungsbeispiel ein O-Ring mit kreisförmigem Querschnitt, welcher ausschließlich zur Abdichtung an der Rückseite 21b des ersten rotierenden Gleitrings 21 dient.

Die Zentriereinrichtung 5 ist eine ringförmige Spannfeder. Die Zentriereinrichtung 5 ist an einer radial inneren Fläche 21c des ersten rotierenden Gleitrings 21 angeordnet. Die Zentriereinrichtung 5 dient zur Zentrierung des ersten rotierenden Gleitrings 21. Somit hat die Zentriereinrichtung 5 keine Abdichtfunktion, sondern nur eine Zentrierfunktion. Da somit die Zentrierung des ersten rotierenden Gleitrings durch die Zentriereinrichtung 5 erfolgt, kann die erste Nebendichtung 4 hinsichtlich ihrer Abdichtungsaufgabe an der Rückseite 21b optimal ausgelegt werden.

An einer Rückseite 22b des ersten stationären Gleitrings 22 ist eine zweite Nebendichtung 6 und eine dritte Nebendichtung 7 angeordnet. Wie aus Fig. 1 ersichtlich ist, ist hierbei an der Rückseite 22b ein Haltering 18 vorgesehen, welcher jeweils eine Nut zur Aufnahme der zweiten und dritten Nebendichtung 6, 7 aufweist. Die zweite und dritte Nebendichtung sind dabei derart angeordnet, dass ein Fluidpfad des Sperrfluids zwischen der zweiten Nebendichtung 6 und der dritten Nebendichtung 7 führt. Hierbei ist auch im Haltering eine Durchgangsöffnung 18a angeordnet.

Wie aus Fig. 1 ersichtlich ist, weist die erste Nebendichtung 4 einen ersten Radius R1, gemessen von der Mittelachse X-X der Gleitringdichtungsanordnung auf. Die zweite Nebendichtung 6 weist einen zweiten Radius R2 auf und die dritte Nebendichtung 7 weist einen dritten Radius R3 auf. Wie aus Fig. 1 ersichtlich ist, liegt der erste Radius R1 dabei zwischen dem zweiten Radius R2 und dem dritten Radius R3. Hierdurch ist die Ungleichung R2 < R1 < R3 erfüllt. Hierdurch kann insbesondere ein Verkippen der Gleitringe der ersten Gleitringdichtung 2 gegeneinander vermieden werden. Dadurch kann im Betrieb der erste Dichtspalt 23 konstant und mit kleiner Abmessung aufrechterhalten werden, so dass die Leckage L des Sperrfluids ins Produkt minimiert werden kann.

Die Gleitringdichtungsanordnung 1 umfasst ferner eine Steuereinheit 10 sowie ein Differenzdruckregelventil 17 in der Zuleitung 11. Ferner ist ein Durchflusssensor 15 in der Zuleitung 11 angeordnet, welcher eine Durchflussmenge durch die Zuleitung 11 misst. Ein Drucksensor 19 ist am Produktraum 40 angeordnet und übermittelt einen Produktdruck an die Steuereinheit 10. Die Steuereinheit 10 ist eingerichtet, ein Druckniveau in einem ersten Raum 50 vor der ersten Gleitringdichtung 2 basierend auf dem Druck im Produktraum 40, einzustellen. Hierdurch ergibt sich automatisch ein Druck in einem zweiten Raum 60 zwischen der ersten Gleitringdichtung 2 und der zweiten Gleitringdichtung 3, welcher niedriger ist als ein Druck im ersten Raum 50. Hierbei kann die Steuereinheit 10 einen Öffnungs- bzw. Schließgrad des Differenzdruckregelventils 17 steuern. Der Öffnungs- bzw. Schließgrad des Differenzdruckregelventils 17 wird hierbei basierend auf dem Produktdruck bestimmt. Hierbei wird ein Druck im ersten Raum 50 über das verstellbare Differenzdruckregelventil 17 derart eingestellt, dass der Druck im ersten Raum 50 immer größer ist als ein Produktdruck im Produktraum 40. Aufgrund der Drosselung des Weges des Sperrfluids ist der Druck im ersten Raum 50 auch immer größer als im zweiten Raum 60.

Somit kann eine Null-Emission des Produkts aus dem Produktraum 40 in Richtung zur Atmosphäre 41 sichergestellt werden. Dadurch kann die gasgeschmierte Tandem-Gleitringdichtungsanordnung insbesondere Erdgas- oder Methan-haltiges Gas abdichten. Durch den einfachen und robusten Aufbau der Gleitringdichtungsanordnung 1 wird ein wartungsfreier Betrieb erreicht. Die zweite Gleitringdichtung 3 dient dabei als Sicherheitsdichtung, falls die erste Gleitringdichtung 2 beschädigt sein sollte oder aus anderen Gründen ausfällt. Somit kann durch die zweite Gleitringdichtung 3 trotz weiterhin rotierender Welle 8 eine Abdichtung gegenüber der Atmosphäre 41 sichergestellt werden.

In der Rückleitung 12 ist ferner noch eine Überwachungseinrichtung 16 angeordnet, welche die Funktion der Gleitringdichtungsanordnung überwacht und bei einem Versagen oder einer Beschädigung der Gleitringdichtungsanordnung ein entsprechendes Störsignal, beispielsweise an eine Leitstelle abgeben kann. Damit ist sichergestellt, dass bei einem Versagen der ersten Gleitringdichtung 2 eine möglichst schnelle Reparatur der ersten Gleitringdichtung 2 erfolgen kann. Die Überwachungseinrichtung 16 kann beispielsweise anhand eines Druckniveaus in der Rückleitung 12 und/oder anhand einer Durchflussmenge des Sperrfluids eine Beschädigung der ersten Gleitringdichtung 2 bestimmen. Weiterhin kann die erfindungsgemäße Gleitringdichtungsanordnung ohne Zwischendichtung, beispielsweise in Form einer Labyrinthdichtung zwischen der ersten Gleitringdichtung 2 und der zweiten Gleitringdichtung 3 auskommen. Dadurch kann eine Herstellung weiter vereinfacht werden und insbesondere werden dadurch auch die Kosten der Herstellung reduziert. Ein weiterer Vorteil der erfindungsgemäßen Gleitringdichtungsanordnung 1 ist deren kompakter Aufbau. Hierdurch eignet sich die Gleitringdichtungsanordnung 1 insbesondere auch für einen Austausch von schon in beispielsweise Verdichterstationen von Pipelines montierten Gleitringdichtungsanordnungen. Insbesondere ist die erfindungsgemäße Gleitringdichtungsanordnung 1 für sehr hohe Drücke bis ca. 160·10⁵ Pa geeignet.

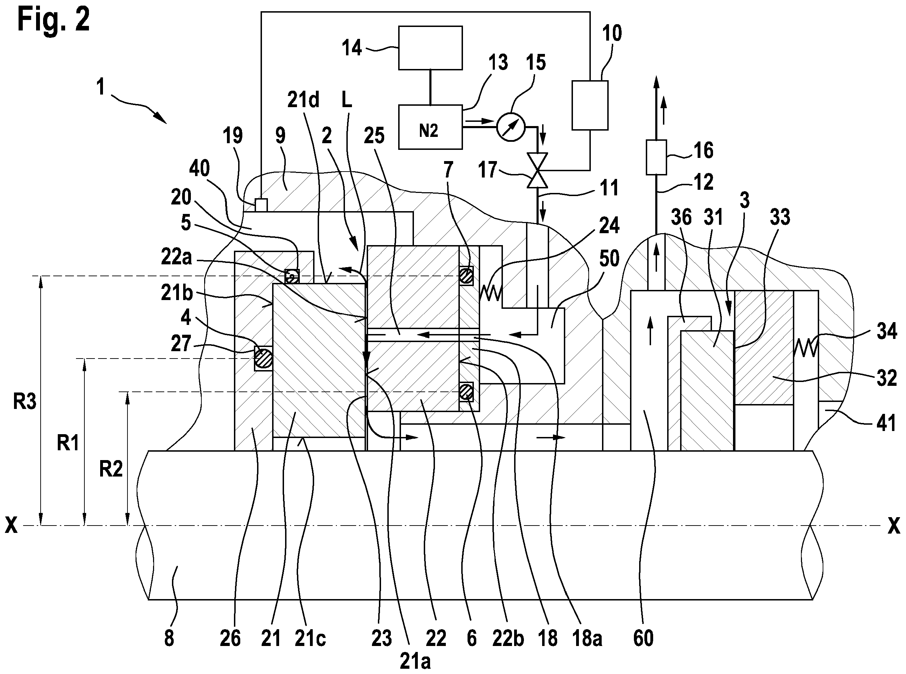

Fig. 2 zeigt eine gasgeschmierte Gleitringdichtungsanordnung 1 gemäß einem zweiten Ausführungsbeispiel der Erfindung, wobei gleiche bzw. funktional gleiche Teile wie im ersten Ausführungsbeispiel bezeichnet sind.

Im Unterschied zum ersten Ausführungsbeispiel ist beim zweiten Ausführungsbeispiel die Zentriereinrichtung 5 an einer radial äußeren Fläche 21d des ersten rotierenden Gleitrings 21 angeordnet. Hierbei ist eine Nut 20 im ersten Gleitringträger 26 vorgesehen, welche die Zentriereinrichtung 5 aufnimmt. Auch bei diesem Ausführungsbeispiel kann der erste Gleitring 21 ohne störende und aufwendige Ausnehmungen oder Vertiefungen oder dgl. ausgebildet werden.

Zu den beiden beschriebenen Ausführungsbeispielen sei angemerkt, dass es auch möglich ist, dass am ersten Gleitring 21 zwei Zentriereinrichtungen 5, nämlich eine erste Zentriereinrichtung an einer radial inneren Fläche 21c wie im ersten Ausführungsbeispiel, und eine zweite Zentriereinrichtung 5 an einer radial äußeren Fläche 21d wie beim zweiten Ausführungsbeispiel vorgesehen sein kann.

Zu den Ausführungsbeispielen sei ferner angemerkt, dass als Zentriereinrichtung statt einer ringförmigen Spannfeder auch ein ringförmig umlaufendes Spannband verwendet werden kann oder alternativ auch ein O-Ring, welcher jedoch nicht hinsichtlich Dichtungseigenschaften optimiert werden muss, da die Abdichtung am ersten Gleitring 21 durch die erste Nebendichtung 4 erfolgt.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

- 1: Gleitringdichtungsanordnung
- 2: erste Gleitringdichtung
- 3: zweite Gleitringdichtung
- 4: erste Nebendichtung
- 5: Zentriereinrichtung
- 6: zweite Nebendichtung
- 7: dritte Nebendichtung
- 8: Welle
- 9: Gehäuse
- 10: Steuereinheit
- 11: Zuleitung
- 12: Rückleitung
- 13: Stickstoff-Quelle
- 14: Stickstoff-Erzeuger
- 15: Durchflusssensor
- 16: Überwachungseinrichtung
- 17: verstellbares Differenzdruckregelventil
- 18: Haltering
- 18a: Durchgangsöffnung
- 19: Drucksensor
- 20: Nut
- 21: erster rotierender Gleitring
- 21a: Gleitfläche
- 21b: Rückseite
- 21c: radial innere Fläche
- 21d: radial äußere Fläche
- 22: erster stationärer Gleitring
- 22a: Gleitfläche
- 22b: Rückseite
- 23: erster Dichtspalt
- 24: erstes Vorspannelement
- 25: Durchgangskanal
- 26: erster Gleitringträger
- 27: Nut
- 31: zweiter rotierender Gleitring
- 32: zweiter stationärer Gleitring
- 33: zweiter Dichtspalt
- 34: zweites Vorspannelement
- 36: zweiter Gleitringträger
- 40: Produktraum
- 41: Atmosphäre
- 50: erster Raum
- 60: zweiter Raum
- L: Leckage
- R1: erster Radius
- R2: zweiter Radius
- R3: dritter Radius
- X-X: Mittelachse

## Patentansprüche

1. Gasgeschmierte Gleitringdichtungsanordnung (1), umfassend
- eine erste Gleitringdichtung (2) mit einem ersten rotierenden Gleitring (21) und einem ersten stationären Gleitring (22), welche zwischen Gleitflächen (21a, 22a) einen ersten Dichtspalt (23) definieren,
- wobei der erste stationäre Gleitring (22) einen Durchgangskanal (25) zum Zuleiten eines Sperrfluids zum ersten Dichtspalt (23) aufweist,
- wobei am ersten rotierenden Gleitring (21) eine erste Nebendichtung (4) zur Abdichtung und eine Zentriereinrichtung (5) zur Zentrierung des ersten rotierenden Gleitrings (21) angeordnet ist, **dadurch gekennzeichnet, dass** der Durchgangskanal (25) geradlinig und parallel zur Mittelachse X-X der Gleitringdichtungsanordnung von einer Rückseite (22b) zur Gleitfläche (22a) des ersten stationären Gleitrings (22) führt,
- und dass an der Rückseite (22b) des ersten stationären Gleitrings (22) eine zweite Nebendichtung (6) und eine dritte Nebendichtung (7) angeordnet sind, wobei ein Fluidpfad des Sperrfluids zum Durchgangskanal (25) im ersten stationären Gleitring (22) zwischen der zweiten und dritten Nebendichtung verläuft, und
- dass ein erster Radius (R1) der ersten Nebendichtung (4) zwischen einem zweiten Radius (R2) der zweiten Nebendichtung (6) und einem dritten Radius (R3) der dritten Nebendichtung (7) liegt.

2. Gleitringdichtungsanordnung nach Anspruch 1, ferner umfassend eine zweite Gleitringdichtung (3) mit einem zweiten rotierenden Gleitring (31) und einem zweiten stationären Gleitring (32), welche zwischen Gleitflächen einen zweiten Dichtspalt (33) definieren.

3. Gleitringdichtungsanordnung nach einem der vorhergehenden Ansprüche, wobei die Zentriereinrichtung (5) an einer radial inneren Fläche (21c) des ersten rotierenden Gleitrings (21) und/oder einer radial äußeren Fläche (21d) des ersten rotierenden Gleitrings (21) angeordnet ist.

4. Gleitringdichtungsanordnung nach einem der vorhergehenden Ansprüche, wobei die erste Nebendichtung (4) an einer Rückseite (21b) des ersten rotierenden Gleitrings (21) angeordnet ist.

5. Gleitringdichtungsanordnung nach einem der vorhergehenden Ansprüche, wobei die Zentriereinrichtung (5) eine umlaufende Spannfeder oder ein umlaufendes Spannband oder ein O-Ring ist.

6. Gleitringdichtungsanordnung nach einem der vorhergehenden Ansprüche, wobei das Sperrfluid Stickstoff ist und die Gleitringdichtungsanordnung ferner eine Stickstoffquelle (13) umfasst.

7. Gleitringdichtungsanordnung nach Anspruch 6, ferner umfassend einen Stickstofferzeuger (14).

8. Gleitringdichtungsanordnung nach einem der vorhergehenden Ansprüche, ferner umfassend eine Steuereinheit (10), ein Differenzdruckregelventil (17) in der Zuleitung (11) und einen Drucksensor (19) zur Bestimmung eines Produktdrucks in einem Produktraum (40), wobei die Steuereinheit (10) eingerichtet ist, das Differenzdruckregelventil (17) basierend auf dem Produktdruck zu steuern.

9. Gleitringdichtungsanordnung nach einem der vorhergehenden Ansprüche, ferner umfassend eine Überwachungseinrichtung (16), welche in einer Rückleitung (12) angeordnet ist.

10. Verdichter oder Kompressor für gasförmige Medien, umfassend eine Gleitringdichtungsanordnung nach einem der vorhergehenden Ansprüche.

## Claims

1. A gas lubricated mechanical seal arrangement (1) comprising
- a first mechanical seal (2) having a first rotating slide ring (21) and a first stationary slide ring (22) defining a first sealing gap (23) between sliding surfaces (21a, 22a),
- wherein the first stationary slide ring (22) comprises a passageway (25) for supplying a barrier fluid to the first sealing gap (23),
- wherein a first secondary seal (4) for sealing and a centering device (5) for centering the first rotating slide ring (21) is disposed, **characterized in that**
- the passage way (25) extends straight and in parallel to the central axes (X-X) of the mechanical seal arrangement from a rear surface (22b) to the sliding surface (22a) of the first stationary slide ring (22),
- and that on the rear surface (22b) of the first stationary slide ring (22) a second secondary seal (6) and a third secondary seal (7) is disposed, wherein a fluid path of the barrier fluid to the passage way (25) in the first stationary slide ring (22) extends between the second and third secondary seals, and
- that a first radius (R1) of the first secondary seal (4) is in the range between a second radius (R2) of the second secondary seal (6) and a third radius (R3) of the third secondary seal (7).

2. The mechanical seal arrangement according to claim 1, further comprising a second mechanical seal (3) having a second rotating slide ring (31) and a second stationary slide ring (32) defining a second sealing gap (33) between sliding surfaces.

3. The mechanical seal arrangement according to one of the preceding claims, wherein the centering device (5) is disposed on a radially inner surface (21c) of the first rotating slide ring (21) and/or a radially outer surface (21d) of the first rotating slide ring (21).

4. The mechanical seal arrangement according to one of the preceding claims, wherein the first secondary seal (4) is disposed on a rear surface (21b) of the first rotating slide ring (21).

5. The mechanical seal arrangement according to one of the preceding claims, wherein the centering device (5) is a circumferential biasing spring or a circumferential biasing band or an O-ring.

6. The mechanical seal arrangement according to one of the preceding claims, wherein the barrier fluid is nitrogen and the mechanical seal arrangement further comprises a nitrogen source (13).

7. The mechanical seal arrangement according to claim 6, further comprising a nitrogen generator (14).

8. The mechanical seal arrangement according to one of the preceding claims, further comprising a control unit (10), a differential pressure control valve (17) in the supply line (11), and a pressure sensor (19) for determining a product pressure in a product chamber (40), wherein the control unit (10) is adapted to control the differential pressure control valve (17) based on the product pressure.

9. The mechanical seal arrangement according to one of the preceding claims, further comprising a monitoring device (16) disposed in a return line (12).

10. A compressor or supercharger for gaseous media, comprising a mechanical seal arrangement according to one of the preceding claims.

## Revendications

1. Ensemble de garniture d'étanchéité à bagues de glissement (1) lubrifié au gaz, comprenant
- une première garniture d'étanchéité à bagues de glissement (2) avec une première bague de glissement rotative (21) et une première bague de glissement stationnaire (22), lesquelles définissent entre des faces de glissement (21a, 22a) une première fente d'étanchéité (23),
- dans lequel la première bague de glissement stationnaire (22) présente un canal de passage (25) destiné à acheminer un fluide de barrage à la première fente d'étanchéité (23),
- dans lequel un premier joint d'étanchéité secondaire (4) pour l'étanchéification et un dispositif de centrage (5) destiné à centrer la première bague de glissement rotative (21) sont disposés sur la première bague de glissement rotative (21), **caractérisé en ce que** le canal de passage (25) mène de manière rectiligne et de manière parallèle par rapport à l'axe central X-X de l'ensemble de garniture d'étanchéité à bagues de glissement depuis un côté arrière (22b) vers la surface de glissement (22a) de la première bague de glissement stationnaire (22),
- et que
un deuxième joint d'étanchéité secondaire (6) et un troisième joint d'étanchéité secondaire (7) sont disposés sur le côté arrière (22b) de la première bague de glissement stationnaire (22), dans lequel un trajet de fluide du fluide de barrage menant au canal de passage (25) s'étend dans la première bague de glissement stationnaire (22) entre le deuxième joint d'étanchéité secondaire et le troisième joint d'étanchéité secondaire, et
- qu'un premier rayon (R1) du premier joint d'étanchéité secondaire (4) se situe entre un deuxième rayon (R2) du deuxième joint d'étanchéité secondaire (6) et un troisième rayon (R3) du troisième joint d'étanchéité secondaire (7).

2. Ensemble de garniture d'étanchéité à bagues de glissement selon la revendication 1, comprenant en outre un deuxième joint d'étanchéité à bagues de glissement (3) avec une deuxième bague de glissement rotative (31) et une deuxième bague de glissement stationnaire (32), lesquelles définissent une deuxième fente d'étanchéité (33) entre des faces de glissement.

3. Ensemble de garniture d'étanchéité à bagues de glissement selon l'une quelconque des revendications précédentes, dans lequel le dispositif de centrage (5) est disposé sur une première face radialement intérieure (21c) de la première bague de glissement rotative (21) et/ou sur une face radialement extérieure (21d) de la première bague de glissement rotative (21).

4. Ensemble de garniture d'étanchéité à bagues de glissement selon l'une quelconque des revendications précédentes, dans lequel le premier joint d'étanchéité secondaire (4) est disposé sur un côté arrière (21b) de la première bague de glissement rotative (21).

5. Ensemble de garniture d'étanchéité à bagues de glissement selon l'une quelconque des revendications précédentes, dans lequel le dispositif de centrage (5) est un ressort de serrage périphérique ou une bande de serrage périphérique ou un joint torique.

6. Ensemble de garniture d'étanchéité à bagues de glissement selon l'une quelconque des revendications précédentes, dans lequel le fluide de barrage est de l'azote et l'ensemble de garniture d'étanchéité à bagues de glissement comprend en outre une source d'azote (13).

7. Ensemble de garniture d'étanchéité à bagues de glissement selon la revendication 6, comprenant en outre un producteur d'azote (14).

8. Ensemble de garniture d'étanchéité à bagues de glissement selon l'une quelconque des revendications précédentes, comprenant en outre une unité de commande (10), une soupape de régulation de pression différentielle (17) dans la conduite d'arrivée (11) et un capteur de pression (19) destiné à définir une pression de produit dans un espace de produit (40), dans lequel l'unité de commande (10) est mise au point pour commander sur la base de la pression de produit la soupape de régulation de pression différentielle (17).

9. Ensemble de garniture d'étanchéité à bagues de glissement selon l'une quelconque des revendications précédentes, comprenant en outre un dispositif de surveillance (16), lequel est disposé dans une conduite de retour (12).

10. Compresseur pour des milieux gazeux comprenant un ensemble de garniture d'étanchéité à bagues de glissement selon l'une quelconque des revendications précédentes.
